# EUROPEAN PATENT APPLICATION

(11) **EP 4 817 974 A1**
(43) Date of publication of application: **07.10.2026**
(21) Application number: 26167137.4
(22) Date of filing: 24.03.2026
(51) Int. Cl.: B60T 13/14

(54) **VEHICLE COMPRISING AN IMPROVED BRAKING SYSTEM**

(30) Priority: 28.03.2025 IT 202500006603
(71) Applicant: Slanzi Oleodinamica S.r.l., 42017 Novellara (RE) (IT)
(72) Inventor: MAMEI, Andrea, 42017 NOVELLARA (RE) (IT)
(74) Representative: Studio Torta S.p.A.

(57) **Abstract**

A braking system (1) for a work vehicle (30), the braking system (1) comprising a brake valve (2) and an operator control (3), which is configured to be operated, in use, directly by an operator and controls the brake valve (2); wherein, the braking system (1) comprises: elastic means (13) interposed between the brake valve (2) and the operator control (3); a piloting chamber (4) interposed between the brake valve (2) and the operator control (3); a first piloting line (5), which connects the piloting chamber (4) to a first oil supply (HP); a regulating system (6; 10) configured to selectively regulate the flow of oil along the first piloting line (5) according to the actuation of the operator control (3).

## Description

### CROSS-REFERENCE TO RELATED APPLICATIONS

This patent application claims priority from Italian patent application no. 102025000006603 filed on March 28, 2025, the entire disclosure of which is incorporated herein by reference.

### TECHNICAL FIELD

The present invention relates to a braking system for a work vehicle.

The present invention finds a preferred, though not exclusive, application in the field of work vehicles, such as agricultural and forestry vehicles.

Said application will be referred to in the following by way of example.

### PRIOR ART

For work vehicles, such as agricultural or forestry vehicles, hydraulic distributors that control the brakes of a vehicle are known.

Said known types of distributors, such as a brake valve, modulate the pressure available from a given hydraulic energy source, typically one or more hydraulic pumps or accumulators, thus reducing the same to a value that is a function of one or more control signals.

As is known, the control signal is controlled by the operator of the vehicle by means of a pedal or manual control.

Said operator control, as is known, is supported by a second automatic control designed to manage the braking control of the vehicle according to safety logic and/or use functions, such as emergency braking, hill start assist, and speed limitation.

However, the combination of current manual and automatic braking regulating systems present some critical issues that, in effect, prevent effective feedback on the control of the operator, thus limiting the safety and braking efficiency of the vehicle.

One of the most significant critical issues with known braking systems occurs when the automatic piloting control operates simultaneously with the operator control (manual or pedal-operated), therefore the braking force is the result
of the sum of the automatic and operator control forces.

In this case, therefore, the operator has no real force feedback on the control, proportional to the braking force, thus making the control unnatural.

There is therefore a need to improve braking systems that combine two types of control, automatic and operator, of a known type, in order to meet the aforementioned needs while overcoming the drawbacks thereof in an optimized and cost-effective manner.

### SUMMARY OF THE INVENTION

The aforementioned object is achieved by a braking system as claimed in the appended claims, which form an integral part of the present description.

### BRIEF DESCRIPTION OF THE DRAWINGS

For a better understanding of the present invention, a preferred embodiment is described in the following, by way of non-limiting example and with reference to the accompanying drawings, wherein:
- Figure 1 is a hydraulic diagram, with parts removed for clarity, illustrating the braking system according to a first embodiment;
- Figure 2 is a hydraulic diagram, with parts removed for clarity, illustrating the braking system according to a second embodiment;
- Figures 3 and 4 are hydraulic diagrams, with parts removed for clarity, illustrating an alternative of the braking system illustrated in Figure 2;
- Figures 5 and 6 are hydraulic diagrams, with parts removed for clarity, illustrating a third embodiment of the braking system illustrated in Figures 1 and 2, respectively;
- Figures 7 and 8 are hydraulic diagrams, with parts removed for clarity, illustrating an alternative of the braking system illustrated in Figures 1 and 2, respectively;
- Figure 9 is a hydraulic diagram, with parts removed for clarity, illustrating an alternative of the braking system illustrated in Figures 1 through 8;
- Figure 10 is a schematic view, with parts removed for clarity, and a sectional view of part of the braking system illustrated in Figure 2 in a first operating configuration;
- Figure 11 is a schematic view, with parts removed for clarity, and a sectional view of part of the braking system illustrated in Figure 2 in a second operating configuration;
- Figure 12 is a schematic view, with parts removed for clarity, and a sectional view of part of the braking system illustrated in Figure 2 in a third operating configuration;
- Figure 13 is a schematic view, with parts removed for clarity, and a sectional view of part of the braking system illustrated in Figure 2 in a fourth operating configuration.

### DETAILED DESCRIPTION OF THE INVENTION

In the attached figures with reference 1, a braking system for agricultural or forestry vehicles is illustrated as a whole with reference 1.

Advantageously, the braking system 1 comprises a brake valve 2 of a known type.

Specifically, the brake valve 2 is a slide valve; advantageously, it is a three-position, three-way proportional valve, supplied by a main pressurized oil supply channel P.

As is known, brake valve 2 also comprises an outlet channel B configured to supply the braking system 1 of the vehicle and a discharge channel T.

The braking system 1 comprises, furthermore, an operator control 3 configured to mechanically actuate the brake valve 2 so as to supply or discharge oil from the outlet channel B of the brake valve 2.

The operator control 3 can be manual or pedal-operated.

Advantageously, the operator control 3 has a braking pressure control feature on the output channel B of the brake valve 2 as a function of the stroke of the operator control 3.

Furthermore, the braking system 1 comprises braking control elastic means 13, specifically one or more springs, configured to progressively control the braking pressure as a function of the stroke exerted by the operator control 3 on the brake valve 2 and the resisting force of the latter.

Specifically, the elastic means 13 are arranged between the operator control 3 and the brake valve 2 and configured to transfer the control force of the operator control 3 to the brake valve 2 and vice versa.

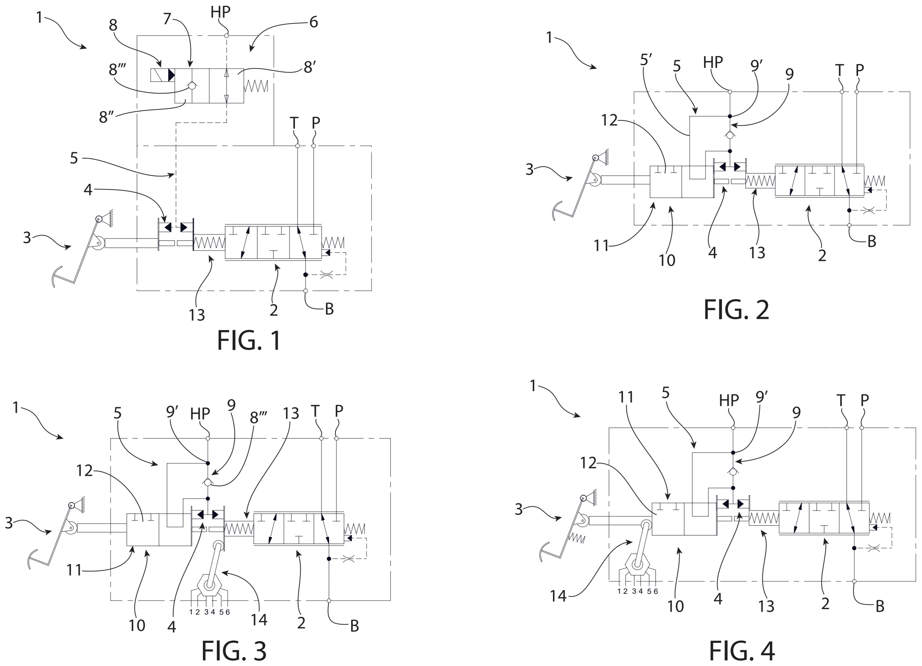

According to a first embodiment, illustrated in Figure 1, the braking system 1 comprises, furthermore, a first oil supply HP fluidically interposed between the operator control 3 and the brake valve 2.

Advantageously, the first oil supply HP is configured to generate a piloting signal and direct the same to a piloting chamber 4 by means of a first piloting line 5.

Specifically, the piloting chamber 4 is interposed between the operator control 3 on one side and the brake valve 2 on the other.

In detail, the first oil supply HP controls the flow of oil along the first piloting line 5 towards the piloting chamber 4.

As illustrated in Figure 1, the brake valve 2, the operator control 3, the elastic means 13, and the piloting chamber 4 are arranged in series one with the other.

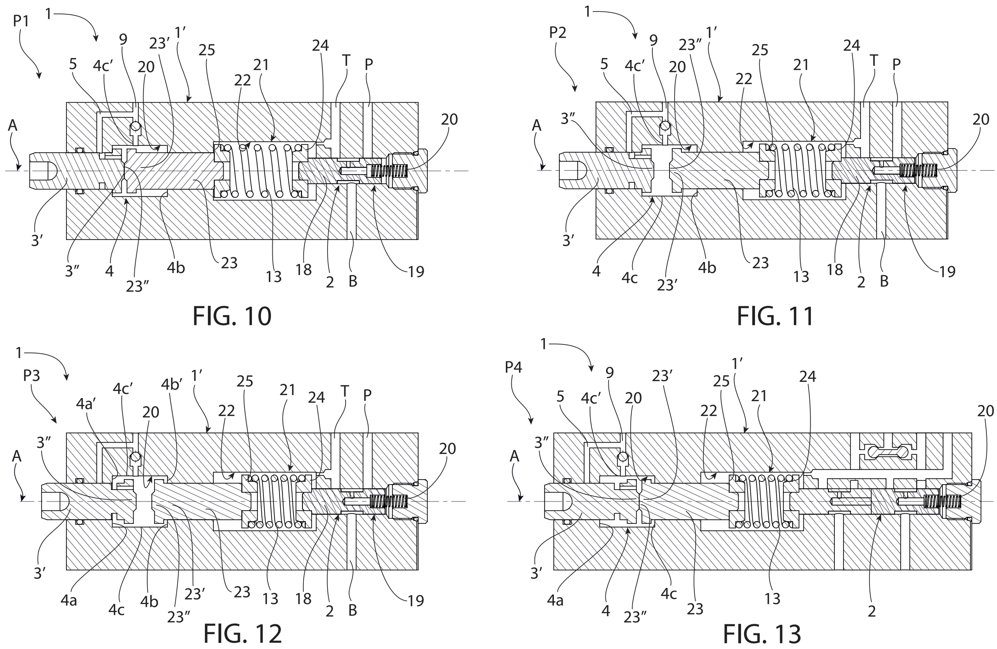

Advantageously, the closing or opening of the first piloting line 5 is controlled by the operator control 3. In particular, when the operator control 3 is in an idle state P1,P2 (Figures 10,11) the first piloting line 5 is open, thus allowing the oil flow from the first oil supply HP to the piloting chamber 4; when the operator control 3 is in a partially and/or fully active state P3, P4 (Figures 12, 13), the first piloting line 5 is at least partially closed, thus reducing or preventing the oil flow between the first oil supply HP and the piloting chamber 4.

According to the present embodiment, the braking system 1 can also comprise a regulating system 6 to regulate the oil flow along the first piloting line 5 and capable of regulating the oil flow between the first oil supply HP and the piloting chamber 4.

Advantageously, the regulating system 6 can comprise valve elements 7 fluidically interposed between the first oil supply HP and the piloting chamber 4.

Advantageously, the regulating system 6 can comprise valve elements 7 fluidically interposed between the first oil supply HP and the piloting chamber 4.

Advantageously, the valve elements 7 can comprise an electrically operated valve, in particular a control valve, such as a solenoid valve 8, configured to control the closure of the first piloting line 5.

In particular, the solenoid valve 8 can assume a first operating condition 8', where the first piloting line 5 is open allowing oil flow between the first oil supply HP and the piloting chamber 4, and a second operating condition 8", where the first piloting line 5 is closed reducing or preventing oil flow between the first oil supply HP and the piloting chamber 4.

In detail, in the second operating condition 8'', the solenoid valve 8 can comprise a one-way valve 8''' configured to only allow oil flow from the first oil supply HP to the piloting chamber 4 and not vice versa.

According to a second embodiment, illustrated in Figure 2, the braking system 1 can also comprise an oil flow regulating system 10 along the first piloting line 5.

Advantageously, the regulating system 10 is mechanically controlled by the operator control 3 and is configured to regulate the oil flow between the first oil supply HP and the piloting chamber 4.

In particular, the flow regulating system 10 essentially comprises valve elements 11 fluidically interposed between the first oil supply HP and the piloting chamber 4.

In detail, said valve elements 11 can comprise a two-position, two-way control valve 12.

According to the example illustrated in Figures 10-13, the valve element 11 can comprise a slider configured to close a connection port to the first piloting line 5.

In further detail, when the operator control 3 is in the idle state P1, P2 (Figures 10,11), the first piloting line 5 is open, allowing oil flow between the first oil supply HP and the piloting chamber 4; when the operator control 3 is in a partially and/or fully active state P3, P4 (Figures 12, 13), the first piloting line 5 is at least partially closed, reducing or preventing the oil flow between the first oil supply HP and the piloting chamber 4.

Therefore, in the present embodiment, the valve elements 11 are controlled by means of a mechanical actuation system, namely, by means of the operator control 3.

As illustrated in the embodiment of Figure 2, the braking system 1 comprises a second piloting line 9 fluidically interposed between the first oil supply HP and the piloting chamber 4.

As illustrated in Figure 2, the first piloting line 5 intersects the second piloting line 9 at a point 9'.

In particular, the first piloting line 5 can comprise at least a first section 5' fluidically parallel relative to the second piloting line 9.

Therefore, in the present embodiment, the valve elements 11 are mechanically controlled by the operator control 3, while the valve elements 7 (of the embodiment of Figure 1) are electrically controlled by an external control.

As illustrated in Figures 3 and 4, the braking system 1 can also comprise sensors 14 that detect the position of the elastic means 13 (Figure 3) or the actuation of the operator control 3 (Figure 4).

In detail, said sensors 14 can be selected from a group of sensor elements of different types.

Specifically, said sensors 14 can be position and/or speed and/or pressure sensors.

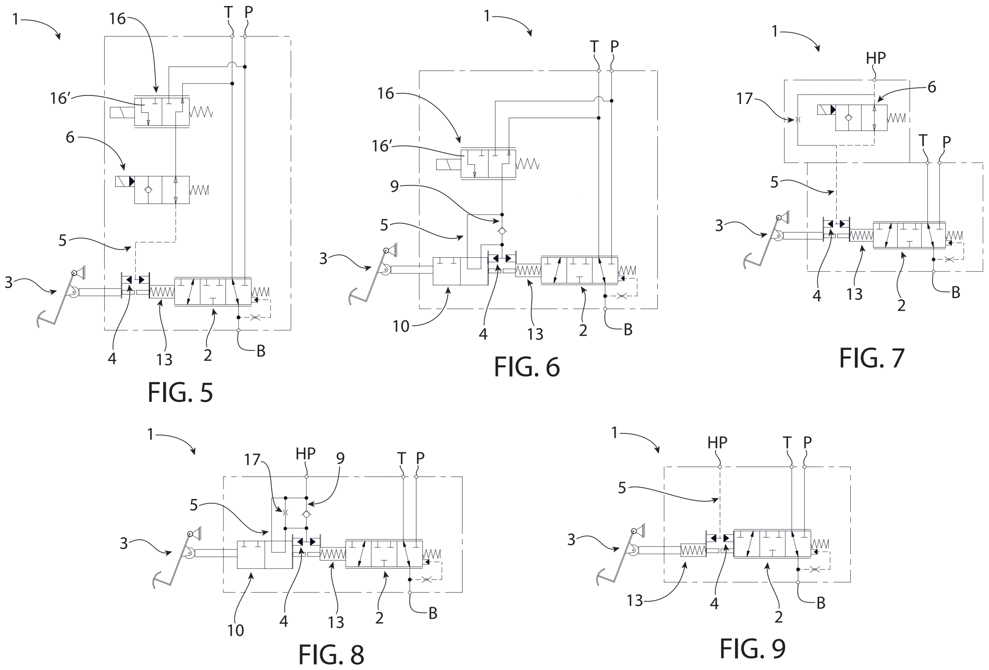

According to a third embodiment, illustrated in Figures 5 and 6, the braking system 1 can also comprise an electronic actuation system (not illustrated) configured to control electrically actuated valve elements 16, advantageously a proportional pressure reducing valve 16' integrated into the braking system 1.

Specifically, the pressure reducing valve 16' is configured to internally generate a given pressure of the first oil supply HP based on an external automatic braking control signal.

Advantageously, said pressure reducing valve 16' can be comprised in braking systems 1 in which valve elements 7 and/or valve elements 11 are provided.

In other words, said pressure reducing valve 16' can be comprised both in the case in which the oil flow control in the first piloting line 5 occurs by way of mechanical adjustment by means of the valve elements 11 and in the case in which the oil flow control in the first and second piloting lines 5, 9 occurs by way of mechanical and/or electrical regulation 7, 11.

In particular, according to the present embodiment, the first oil supply HP can be generated within the braking system 1.

As illustrated in Figures 7 and 8, the braking system 1 can also comprise at least one oil leak 17 so as to allow a gradual oil discharge between the piloting chamber 4 and the first oil supply HP when the former is at a higher pressure than the latter.

In particular, the oil leak 17 can be made, for example, in the form of an orifice preferably inside a section of the first or second piloting line 5, 9 as illustrated in Figures 7 and 8.

As illustrated in Figures from 10 to 13, the braking system 1 comprises a body 1' containing chambers and ducts for the passage of oil and the housing of valves, as will be illustrated in the following.

In particular, according to the example illustrated, the brake valve 2 is housed, as will be explained in more detail in the following, inside the body 1' and is movable along a longitudinal axis A to deliver, in use, high-pressure oil to the brakes of the vehicle.

In particular, the brake valve 2 comprises a main supply channel P for high-pressure oil supplied from a source not illustrated, an outlet channel B configured to supply the braking system 1 of the vehicle, and a discharge channel T, already described previously and not further described for brevity.

The brake valve 2 is a slide valve; specifically, it is a three-position, three-way valve.

Advantageously, the body 1' has a space 19 within which a first spool 18 of the brake valve 2 is housed, namely, at least one partially hollow cylindrical body, which is coaxial with the longitudinal axis A and is mounted for axial sliding within the space 19.

As illustrated in Figures from 10 to 13, the brake valve 2 comprises, furthermore, return means 20 of the first spool 18, which act axially on the first spool 18 and are configured to return the latter to the rest condition P1 (Figure 10) when the elastic means 13 are not subjected to compression.

Advantageously, the body 1' has a housing 21, namely, a cylindrical chamber extending along the longitudinal axis A and defining a space 22 configured to house the elastic means 13.

Said elastic means 13 are mechanically connected on one side to the first spool 18 of the brake valve 2 and on the other side to a second spool 23.

In detail, the elastic means 13 rest on both the first spool 18 of the brake valve 2 and the second spool 23 by means of a first and second support 24, 25 arranged within the space 22 and coaxial with the longitudinal axis A.

Advantageously, the operator control 3, the piloting chamber 4, the housing 21, and the brake valve 2 are arranged in series with one another.

Furthermore, the body 1' comprises the piloting chamber 4, namely a cylindrical chamber extending along the longitudinal axis A.

Specifically, the piloting chamber 4 is delimited by a pair of axial walls 4a and 4b spaced apart along the longitudinal axis A, and by a tubular side wall 4c that extends around the longitudinal axis A and connects to the two axial walls 4a and 4b.

In detail, the two axial walls 4a, 4b, and the side wall 4c define a space 20 of the piloting chamber 4.

In further detail, the second spool 23 is coaxial with the longitudinal axis A and is mounted so that it slides axially and, in a fluid-tight manner between the space 22 of the housing 21 and the space 20 of the piloting chamber 4.

In other words, the piloting chamber 4 and the housing 21 are not fluidly communicating with one another.

In addition, the axial wall 4a has a first opening 4a' configured to at least partially house a first portion 3' of the operator control 3 within the space 20.

The axial wall 4b, however, has a second opening 4b' configured to at least partially house a second portion 23' of the second spool 23 within the space 20 of the piloting chamber 4.

Specifically, the first and second portions 3', 23' are coaxial with the longitudinal axis A and are mounted so as to slide axially within the space 20.

More specifically, the side wall 4c has a third opening 4c' configured to allow the passage of oil from the second piloting line 9.

Specifically, the first and/or second piloting lines 5, 9 are fluidically connected to the space 20 of the piloting chamber 4.

As illustrated in Figures 12 and 13, the piloting chamber 4 at least partially houses the first portion 3', which comprises a first axial end 3" arranged opposite relative to the second axial wall 4b of the piloting chamber 4.

Advantageously, the second portion 23' comprises a second axial end 23'' arranged opposite relative to the first axial wall 4a of the piloting chamber 4, thus facing the first axial end 3".

In detail, the two axial ends 3", 23" are adjacent when the pressure exerted on the operator control 3 is zero and there is no piloting control of the piloting chamber 4 (Figure 10), or when the operator control 3 is active but there is no piloting control 4 (Figure 13).

Advantageously, the second axial end 23'' of the second spool 23 is shaped so as to keep the first portion 23' abutting the second axial wall 4b of the piloting chamber 4 in the maximum pressure condition P4 by the operator control 3 and/or the automatic piloting.

The braking system 1 can comprise additional mechanical and/or electronic elements suitable for the operation thereof or other elements suitable for the assembly of the same and not described for brevity.

The operation of the braking system 1 according to the present invention will be described in the following.

If during automatic braking, namely, in the case of the second operating configuration illustrated in Figure 11, the operator wishes to take manual control of the braking by way of the operator control 3, for example by increasing the braking pressure by way of the pedal, the operator control 3 will no longer be in the rest state P2 (Figure 11).

In this way, as illustrated in the third operating configuration in Figure 12, there would be combined braking, that is, automatic braking and braking by operator control 3.

In the latter case, the operator applies braking pressure to the piloting chamber 4 containing the oil, thus moving from an initial operating state P2 in which the first piloting line 5 is open to an operating state P3 in which the first piloting line 5 is partially or completely closed.

Therefore, when the first piloting line 5 is completely closed (Figure 12), the oil is trapped inside the piloting chamber 4, causing an increase in pressure that activates the second spool 23.

Therefore, following the action exerted by the operator in the piloting chamber 4, the second spool 23 moves towards the brake valve 2, consequently causing the compression of the elastic means 13.

In other words, following the closure of the first piloting line 5, the compression of the elastic means 13 is given by the sum of the activation stroke of the operator control 3 and the activation stroke of the piloting control of the chamber 4. When, however, the operator wishes to cease manual braking control, one reduces the actuation of the operator control 3, returning the latter to the idle operating state (Figures 10, 11) .

In this way, the operator control 3 opens the first piloting line 5, allowing the oil trapped inside the piloting chamber 4 to flow towards the first piloting line 5.

Once the oil is drained, all the elements of the braking system 1 gradually transit from the operating condition P3 (Figure 12), then returning to the operating condition P2 (Figure 11) if the automatic control is still active, or to the operating condition P1 (Figure 10) if the automatic control is deactivated.

If the operator decides to take manual control of the braking by way of the operator control 3, as illustrated in Figure 13, the operator control 3 mechanically activates the second spool 23, which, in turn, acts on the elastic means 13, causing the same to compress.

In this case, therefore, since the first piloting line 5 is closed by the actuation of the operator control 3, it is possible for the automatic control to increase the pressure inside the piloting chamber 4 by way of the second piloting line 9.

Specifically, the oil is introduced into the piloting chamber 4 by means of the one-way valve 12 arranged on the second piloting line 9.

In the first embodiment (Figure 1), the braking system 1 is controlled by a regulating system 6 for the oil flow comprising electrically operated valve elements 7.

Instead, in the second embodiment (Figure 2), the braking system 1 comprises a mechanical regulating system 10, and braking occurs as described above.

In the third embodiment (Figures 5 and 6), unlike the previous embodiments, the braking system 1 comprises a proportional pressure reducing valve 16' integrated into the brake valve 2. From the foregoing, the advantages of a braking system according to the invention are evident.

Thanks to the presence of the first and second piloting lines, it is possible to simultaneously control both automatic and manual braking.

Thanks to the valve elements 11, in particular the ON-OFF control valve 12, it is possible to close the oil flow through the first piloting line 5 to the piloting chamber 4, causing the trapped oil to generate a fluidic spacing effect between the operator control 3 and the second spool 23, thus promoting optimal braking control.

When the braking pressure increases by the operator control, the first piloting line 5 is closed by the control valve 12.

Advantageously, as a result, the one-way valve 8‴ is closed when the operator control 3 is predominant, but allows oil to flow through the second piloting line 9 when the piloting control prevails over the operator control 3.

Therefore, this function allows the operator, during automatic braking, to take control of the brake immediately with the first movement of the operator control 3, for example by means of the pedal, thus providing real feedback on the braking pressure.

Advantageously, since the operator control 3 and the piloting chamber 4 are arranged in series, the control with the predominant force is the one with the greatest effect, without, therefore, adding together said effects.

Even more advantageously, when braking is automatically controlled, the reaction on the operator control 3 is consistent with the braking action.

Advantageously, the presence of elastic means 13 for braking control between the operator control 3 and the brake valve 2 allows for a proportional relationship between the stroke of the operator control 3 and the pressure acting on the brake valve 2, said pressure is balanced by the reaction generated on the brake valve 2 by the controlled braking pressure. Furthermore, the previous advantage can also be achieved by changing the position of the elastic means 13, specifically arranging the same between the operator control 3 and the piloting chamber 4, as illustrated in Figure 9.

Thanks to the presence of the one-way valve 8‴ along the second piloting line 9, it is possible, for the automatic control, to increase the braking action even when the operator control 3 is active, by increasing the quantity of oil and, therefore, increasing the pressure between the two front ends 3", 23", favouring the detection of real braking feedback.

Advantageously, if the operator manually brakes during automatic braking, the presence of an oil leak 17 helps restore the operator control to the natural state it would be in if automatic braking had not occurred.

Thanks to the presence of sensors 14 installed on the operator control 3, it is possible, during automatic braking, to determine whether the operator is activating the control, and advantageously, to control the immediate closure of the piloting lines 5.

Thanks to the presence of sensors 14 installed on the elastic means 13, it is possible to verify the actual braking status, in other words it can be used for automatic braking system diagnostics and/or to indirectly determine whether the operator is activating the brake control.

Advantageously, the presence of a proportional pressure reducing valve 16' integrated into the brake valve 2 allows the braking system operation to be adjusted without the use of an external device and to use the supply pressure of the brake valve 2, improving the efficiency and optimizing the operation of the entire braking system.

Furthermore, the braking system according to the invention allows for more precise management of vehicle performance and efficiency thanks to the regulating systems and electronic controls.

Furthermore, the braking system is reliable and simple and inexpensive to implement.

It should also be noted that the regulating systems 6, 10 or the valve elements 7, 11 can be applied to any braking system.

Finally, it is clear that modifications and alternatives can be made to the braking system according to the present invention, which, however, do not depart from the scope of protection defined by the claims.

In particular, the arrangement and shape of the elastic means 13 for braking control can be different, as can the type of sensor elements 14.

As illustrated in Figures 5 and 6, the sensors 14 could be mechanically connected to the elastic means 13 or to the operator control 3.

## Claims

1. A braking system (1) for a work vehicle (30), said braking system (1) comprising a brake valve (2) and an operator control (3), which is configured to be operated, in use, directly by an operator and controls said brake valve (2); wherein, said braking system (1) comprises elastic means (13) interposed between said brake valve (2) and said operator control (3); a piloting chamber (4) interposed between said brake valve (2) and said operator control (3); a first piloting line (5), which connects said piloting chamber (4) with a first oil supply (HP); a regulating system (6; 10) configured to selectively regulate the flow of oil along said first piloting line (5) according to the actuation of said operator control (3).

2. A braking system (1) according to claim 1, wherein:
- when the operator control (3) is in an idle state (P1, P2) the first piloting line (5) is open allowing oil flow between the first oil supply (HP) and the piloting chamber (4);
- when the operator control (3) is in a partially and/or fully active state (P3, P4) the first piloting line (5) is at least partially closed reducing or preventing oil flow between the first oil supply (HP) and the piloting chamber (4).

3. A braking system according to claim 1 or 2, comprising: a second piloting line (9) connecting said first oil supply (HP) and said piloting chamber (4); a one-way valve (8''') arranged along said second piloting line (9) configured to allow only the flow of oil from said first oil supply (HP) to said piloting chamber (4); in particular, said second piloting line (9) is fluidically parallel to said first piloting line (5).

4. A braking system according to any one of the preceding claims, wherein said regulating system (6) is electrically controlled according to the state of said operator control (3),
wherein said regulating system (6) comprises valve elements (7), in particular a two-position, two-way solenoid valve (8).

5. A braking system according to any one of claims 1 to 3, wherein said regulating system (10) is mechanically controlled according to the actuation of said operator control (3);
wherein said regulating system (10) comprises valve elements (11), in particular a control valve (12).

6. A braking system according to any one of the preceding claims, comprising at least one oil leak (17) communicating between the first oil supply (HP) and the piloting chamber (4) and configured to discharge oil from the piloting chamber (4) when the pressure in the piloting chamber (4) is greater than the pressure of the first oil supply (HP).

7. A braking system according to any one of the preceding claims, comprising a sensor (14) which detects a physical quantity indicative of the state, in particular of the position, of the elastic means (13) or of the actuation of the operator control (3).

8. A braking system according to any of the preceding claims, comprising electrically actuated valve elements (16') fed by the first oil supply (HP) and configured to control the piloting chamber (4) as a function of an external control signal.

9. A braking system according to claim 8, wherein said electrically actuated valve elements (16') are of the proportional type.

10. A braking system according to claim 8 or 9, in which the first oil supply (HP) of said electrically actuated valve elements (16') is fed from a main supply channel (P) of the brake valve (2).

11. A vehicle (30) comprising a braking system (1) according to any of the preceding claims.
